# EUROPÄISCHE PATENTSCHRIFT

(11) **EP 0 535 386 B1**
(45) Veröffentlichungstag und Bekanntmachung des Hinweises auf die Patenterteilung: **09.04.1997**
(21) Anmeldenummer: 92114957.1
(22) Anmeldetag: 02.09.1992
(51) Int. Cl.: C21C 1/10

(54) **Verfahren zur Herstellung von Basiseisen für Sphäroguss**
Process for producing a basic iron for nodular cast iron
Procédé de fabrication d'un fer de base pour la fonte nodulaire

(30) Priorität: 01.10.1991 DE 4132691
(43) Veröffentlichungstag der Anmeldung: 07.04.1993
(73) Patentinhaber: MESSER GRIESHEIM GMBH, D-60547 Frankfurt (DE)
(72) Erfinder: Gross, Gerhard, Dr., W-4156 Willich 4 (DE); Velikonja, Marian, W-5276 Wiehl (DE)

(56) Entgegenhaltungen:
- DD-A- 72 166
- DE-A- 2 137 602
- DE-A- 3 726 053
- FR-A- 2 672 903
- US-A- 3 443 806
- US-A- 3 484 232
- US-A- 3 607 227
- US-A- 4 971 623

## Beschreibung

Die Erfindung betrifft ein Verfahren zur Herstellung von Basiseisen für Sphäroguß.

Die Gießereien von hochwertigen Gußteilen aus Sphäroguß (Gußeisen mit Kugelgraphit) benutzen bisher Einsatzstoffe, die eine gesicherte Zusammensetzung haben. Dafür sind besonders zwei Einsatzstoffe mit besonders niedrigem Mn-Gehalt < 0,20 Gew. % geeignet. Diese sind: das hochwertige Sorel-Eisen und die Abfälle aus der Automobilindustrie, die in der Form und der Bezeichnung "Tiefziehpakete" im Schrotthandel angeboten werden, wobei die Tiefziehpakete etwa halb so teuer wie das Sorel-Eisen sind. Durch Mischung beider Einsatzstoffe läßt sich ein noch tragfähiger Preis für die Herstellung von Sphäroguß erreichen.

Höhere Korrosionsbeständigkeit und Gewichtseinsparung bei gleichbleibender Festigkeit veranlassen aber die Automobilindustrie in zunehmendem Maße, verzinkte Stahlbleche einzusetzen. Durch die zwangsläufige Verwendung dieses Stahlschrottes steigt der Gehalt der unerwünschten Elemente wie Zink, Bor, Niob und Titan auf über 1,0 Gew. % an.

Der Zink verursacht eine Reihe von Problemen. Beim Einschmelzen muß mit einer Verdampfung vom Zink gerechnet werden. Die Umweltbelastung durch Zinkoxid als weißer Rauch beim Gießen, Verluste von Magnesium durch Verdampfen und eine Gefährdung der mechanischen Eigenschaften sind die Folgen, falls der Zinkgehalt im Sphäroguß nicht unterhalb von 100 ppm = 0,01 Gew. % eingestellt werden kann.

Bei zunehmendem Einsatz verzinkter Tiefziehbleche im Kraftfahrzeugbau würde deshalb der Hauptlieferant eines geeigneten, relativ preiswerten Einsatzstoffes zur Erzeugung eines Basiseisens für Sphäroguß ausfallen. Abgesehen von der Frage, ob dieser Schrott überhaupt mengenmäßig durch die oben beschriebenen Roheisensorten, wie Sorelmetall ersetzt werden kann, entsteht ein Preisproblem. Durch den Ausfall geeigneter preiswerter Schrottmengen (tragbarer Mischpreis) muß es zwangsläufig zu einer wesentlichen Anhebung des Preises für Sphäroguß kommen. Die Folge könnte eine geringere Anwendung von Sphäroguß sein.

Die Autoindustrie setzt darüber hinaus auch zunehmend neue Stahlmarken ein, die mit dem Sammelbegriff HSLA-Stähle (high strength low alloy) besondere mechanische Eigenschaften aufweisen. Diese Eigenschaften werden durch Mikrolegierungen wie: Niob, Titan und Bor in geringen Anteilen von 5 - 1000 g/t erreicht. Die Legierungen verbleiben im Schrott und würden infolge Karbidbildung die für die Sphäroguß typische sphärolitische Bildung von Graphit stören. Deshalb fallen diese HSLA-Stähle bisher zur Erzeugung eines Basiseisens für Sphäroguß ebenfalls aus.

Der Erfindung liegt die Aufgabe zugrunde, ein Verfahren zur Herstellung von Basiseisen für Sphäroguß zu schaffen, welches die Verwendung von verzinkten Tiefziehblechen sowie HSLA-Stählen ermöglicht.

Bekannt ist im übrigen (US-A-3 607 227) Sphärogußeisen in einem einzigen Elektrolichtbogenofen herzustellen unter Einblasen von Prozeßgas zum Entfernen unerwünschter Legierungselement.

Erfindungsgemäß wird die oben genannte Aufgabe mit den im Kennzeichen des Anspruches 1 angegebenen Merkmalen gelöst.

Vorteilhafte Weiterbildungen der Erfindung sind in den Ansprüchen 2 bis 9 angegeben.

Bei der Erfindung wird vorzugsweise in einem Netzfrequenz- oder Mittelfrequenz-Induktionsofen durch Einsatz von Tiefziehpaketen (verpresste Abfälle aus der Automobilindustrie, die im Sphäroguß unerwünschte Legierungselemente wie Zink, Bor, Niob, Titan enthalten) ein Vormetall erschmolzen und mit durch den Boden des Induktionsofens eingeleitete Gase oxidisch behandelt, vorzugsweise bis die Gehalte von Zn, Ti, Nb und B der Schmelze durch Verdampfung und Oxidation bis auf 0,001 bis 0,01 Gew. % abgebaut sind.

Anschließend wird die Schlacke entfernt und die Schmelze in einen nachgeschalteten Ofen und/oder Mischer umgefüllt, wo unter Zugabe von Silizium- und Kohlenstoffträger im Ofen und/oder in die Pfanne die gewünschte Zusammensetzung des Basiseisens erreicht wird. Aus dem Ofen und/oder Mischer werden danach portionsweise die Basiseisenmengen in die Gießpfanne abgegossen und durch Mg-Legierungen zum Sphärogußeisen umgewandelt.

Die Erfindung sieht einen Induktionsofen als Einschmelz- und Einblasaggregat vor. Durch eine Einhausung können die Abgase vollständig gesammelt und einer Entstaubungsanlage zugeführt werden. Dadurch kann eine Umweltbelastung ausgeschlossen werden. Der Schrott wird über Chargierkörbe oder durch Chargier-Schwing-Fördereinrichtungen unter Luftabschluß in den Ofen eingesetzt. Der Zugang zur Schmelze ist nicht notwendig, die Raffination (Abbau der unerwünschten Legierungselemente) läuft durch die durch den Ofenboden eingeleiteten Prozeßgase und die Zugabe von festen Oxiden mittels Fernbedienung ab.

### VERFAHRENSABLAUF

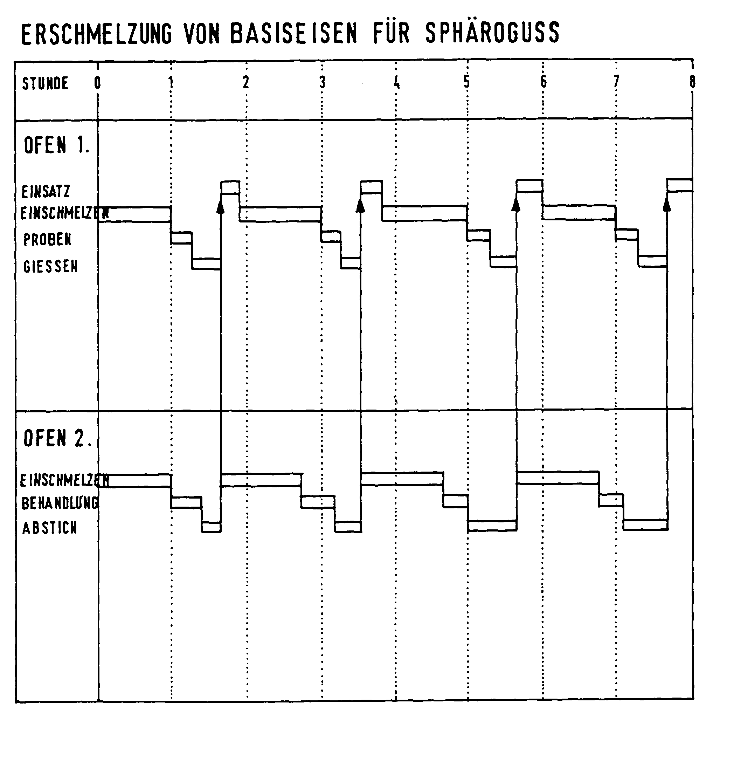

Wie die einzige Fig. darstellt, wird die Herstellung von Basiseisen für Sphäroguß mit einer Gattierung von 50 % Kreislauf und 50 % Schrott in Form von Paketen in zwei Netzfrequenz-Induktionsöfen durchgeführt.

Der Ofen 1 zum Einschmelzen von Kreislaufmaterial ist ein Induktionsofen mit einem sauer zugestellten (Quarz) Schmelztiegel, in dem durch das Umfüllen aus dem Ofen 2 und Sumpffahrweise, eine hohe Schmelzleistung von 1200 bis 1500 kg pro Stunde und MVA installierter Leistung, erreicht werden kann. Durch offenes Schmelzen ist der Zugang zum Ofen frei, durch gängige Kontrollen wie Probenahme, Erstarrungskurve, Keilabguß usw., wird die Gußgüte überwacht. Durch Umfüllen des flüssigen Vormetalls aus dem Ofen 2 beginnt der Einschmelzprozeß.

Der Ofen 2 zum Einschmelzen von Stahlschrott ist ein eingehauster Induktionsofen mit einem neutral (Tonerde) oder basisch (Magnesit) zugestellten Schmelztiegel. Im Boden des Tiegels ist ein Spülstein mit gerichteter Porosität eingebaut, der eine Blasleistung von bis 1000 l Prozeßgas/min zuläßt. Die Schmelzleistung wird durch eine 30- bis 50 %-ige Sumpffahrweise dem anderen Ofen angeglichen. Die Raffination des Einsatzes findet während des Einschmelzens statt. Die Schmelze wird abgeschlackt und damit die oxidierten unerwünschten Elemente entfernt. Nach dem Einschmelzen wird die Vorschmelze auf die Begleitelemente kontrolliert und durch Umfüllen in den Ofen 1 mit Kreislaufmaterial unter Zugabe von Silizium- und Kohlenstoffträger in der Pfanne und/oder im Ofen auf die vorgesehene Zusammensetzung auflegiert und für die vorgesehene Graphitbildung konditioniert.

## Patentansprüche

1. Verfahren zur Herstellung von Basiseisen für Sphäroguß
dadurch gekennzeichnet,
daß zunächst Stahlschrottabfälle, die im Sphäroguß unerwünschten Legierungselemente wie Zink, Bor, Niob, Titan enthalten, in einem Induktionsofen (2) eingeschmolzen werden,
daß anschließend durch Einblasen von Prozeßgasen im Induktionsofen (2), die Legierungselemente, vorzugsweise durch Verdampfung und Oxidation, abgebaut werden und
daß danach die gereinigte Stahlschmelze in einen separaten Ofen (1) übergeführt wird und
daß in dem Ofen (1) und/oder dessen Pfanne durch Zugabe von Silizium und Kohlenstoff die gewünschte Zusammensetzung des Basiseisens für Sphäroguß erreicht wird.

2. Verfahren nach Anspruch 1,
dadurch gekennzeichnet,
daß das Einblasen der Prozeßgase durch einen Bodenstein mit gerichteter Porosität erfolgt.

3. Verfahren nach Anspruch 1 oder 2,
dadurch gekennzeichnet,
daß die gereinigte Stahlschmelze mit dem in einem separaten Ofen geschmolzenen Kreislaufmaterial gemischt wird.

4. Verfahren nach einem der Ansprüche 1 bis 3,
dadurch gekennzeichnet,
daß als Prozeßgase Sauerstoff und/oder Kohlendioxid und/oder Chlor und/oder Argon und/oder Stickstoff verwendet werden.

5. Verfahren nach einem der Ansprüche 1 bis 4,
dadurch gekennzeichnet,
daß für die Oxidation der Legierungselemente auch Feststoffe wie Eisenerz und/oder Walzzunder und/oder andere feste Oxide verwendet werden.

6. Verfahren nach einem der Ansprüche 1 bis 4,
dadurch gekennzeichnet,
daß die Prozeßgasmenge 1 bis 100 l pro Tonne Schmelze
und Minute beträgt.

7. Verfahren nach einem der Ansprüche 1 bis 6,
dadurch gekennzeichnet,
daß die durch Prozeßgase und feste Oxide eingebrachte Sauerstoffmenge in einem Mengenverhältnis von 1:3 bis 1:10 zum Gehalt der zum Abbau vorgesehenen Elemente: Zn, Ti, Nb und B steht.

8. Verfahren nach einem der Ansprüche 1 bis 7,
dadurch gekennzeichnet,
daß zur Herstellung von Basiseisen und/oder Stahlguß mit einem Kohlenstoffgehalt von 3,0 bis 4,5 Gew. %, einem Siliziumgehalt von 1,0 bis 4,0 Gew. %, einem Mangangehalt bis max. 0,30 Gew. %, einem Phosphorgehalt bis max. 0,10 Gew. % und einem Schwefelgehalt bis max. 0,010 Gew. % zunächst in einem Netz- oder Mittelfrequenzinduktionsofen durch Einsatz von zink-, bor-, niob- und titanlegierten Schrottabfällen ein Vormetall eingeschmolzen wird,
daß anschließend durch den Boden des Induktionsofens Prozeßgase eingeblasen werden, um die unerwünschten Zink-, Titan-, Niob- und Borgehalte der Rohschmelze durch Verdampfung und Oxidation bis auf die Gehalte von 0,001 bis 0,01 Gew. % abzubauen, wonach abgeschlackt wird und
daß nach dem Abschlacken durch Umfüllen in einen nachgeordneten Schmelzofen unter Zugabe von Silizium- und Kohlenstoffträger in den Ofen und/oder in die Pfanne, die gewünschte Zusammensetzung des Basismetalls für Sphäroguß erreicht wird.

## Claims

1. Method for producing base iron for nodular cast iron, characterized in that steel scrap wastes containing alloying elements, such as zinc, boron, niobium, titanium, which are undesirable in the nodular cast iron are first melted in an induction furnace (2), in that the alloying elements are then removed, preferably by vaporization and oxidation, by injecting processing gases into the induction furnace (2), and in that the purified steel melt is subsequently transferred to a separate furnace (1), and in that the desired composition of the base iron for nodular cast iron is achieved in the furnace (1) and/or its ladle by adding silicon and carbon.

2. Method according to Claim 1, characterized in that the processing gases are injected through a base block having directional porosity.

3. Method according to Claims 1 or 2, characterized in that the purified steel melt is mixed with the returns which have been melted in a separate furnace.

4. Method according to one of Claims 1 to 3, characterized in that oxygen and/or carbon dioxide and/or chlorine and/or argon and/or nitrogen are used as processing gases.

5. Method according to one of Claims 1 to 4, characterized in that solids, such as iron ore and/or rolling scale and/or other solid oxides are also used for the oxidation of the alloying elements.

6. Method according to one of Claims 1 to 4, characterized in that the amount of processing gas is 1 to 100 1 per tonne of melt and per minute.

7. Method according to one of Claims 1 to 6, characterized in that the amount of oxygen introduced by processing gases and solid oxides is in a quantitative ratio of 1:3 to 1:10 to the content of the elements Zn, Ti, Nb and B intended for removal.

8. Method according to one of Claims 1 to 7, characterized in that, to produce base iron and/or cast steel having a carbon content of 3.0 to 4.5% by weight, a silicon content of 1.0 to 4.0% by weight, a manganese content not exceeding 0.30% by weight, a phosphorus content not exceeding 0.10% by weight and a sulphur content not exceeding 0.010% by weight, a blown metal is first remelted in a mains-frequency or medium-frequency induction furnace using zinc-, boron-, niobium- and titanium-alloyed scrap wastes, in that processing gases are then injected through the base of the induction furnace in order to remove the undesirable zinc, titanium, niobium and boron contents of the crude melt by evaporation and oxidation to contents of 0.001 to 0.01% by weight, after which deslagging is carried out, and in that, after the deslagging, the desired composition of the base metal for nodular cast iron is achieved by transfer to a downstream melting furnace with a silicon carrier or a carbon carrier being added to the furnace and/or to the ladle.

## Revendications

1. Procédé de fabrication d'un fer de base pour la fonte modulaire,
caractérisé en ce qu'
on refond d'abord dans un four à induction des chutes et riblons d'acier, qui contiennent des éléments d'alliage non désirés dans la fonte modulaire comme du zinc, du bore, du niobium, du titane, en ce qu'ensuite les éléments d'alliage sont dégradés par insufflation de gaz de procédé dans le four à induction (2), de préférence par vaporisation et oxydation et en ce qu'ensuite la masse d'acier fondue purifiée est transférée dans un four séparé (1) et,
en ce que dans le four (1) et/ou dans sa cuve, on obtient la composition désirée du fer de base pour la fonte modulaire par addition de silicium et de carbone.

2. Procédé selon la revendication 1,
caractérisé en ce que
l'insufflation des gaz de procédé a lieu par une dalle de socle ayant une porosité orientée.

3. Procédé selon les revendications 1 ou 2,
caractérisé en ce que
la masse d'acier fondu purifié est mélangée avec la matière en circulation fondue dans un four séparé.

4. Procédé selon une des revendications 1 à 3,
caractérisé en ce qu'
on utilise comme gaz de procédé de l'oxygène et/ou du gaz carbonique et/ou du chlore et/ou de l'argon et/ou de l'azote.

5. Procédé selon une des revendications 1 à 4,
caractérisé en ce qu'
on utilise aussi pour l'oxydation des éléments d'alliage des matières solides comme du minerais de fer et/ou des battitures et/ou d'autres oxydes solides.

6. Procédé selon une des revendications 1 à 4,
caractérisé en ce que,
la quantité de gaz de procédé s'élève de 1 à 100 1 par tonne de masse fondue et par minute.

7. Procédé selon une des revendications 2 à 6,
caractérisé en ce que
la quantité d'oxygène introduite par les gaz de procédé et les oxydes solides se trouve dans un rapport quantitatif compris entre 1:3 et 1:10 par rapport à la teneur des éléments : Zn, Ti, Nb et B prévus pour être dégradés.

8. Procédé selon une des revendications 1 à 7,
caractérisé en ce que
pour fabriquer du fer de base et/ou de l'acier coulé ayant une teneur de carbone de 3,0 à 4,5 % en poids, une teneur de silicium de 1,0 à 4,0 % en poids, une teneur de manganèse jusqu'à un maximum de 0,30 % en poids, une teneur de phosphore jusqu'à un maximum de 0,10 % en poids et une teneur de soufre jusqu'à un maximum de 0,010 % en poids, on doit fondre d'abord un métal préaffiné dans un four à induction à la fréquence du réseau ou à une moyenne fréquence en utilisant des chutes et niblons alliés de zinc, de bore, de niobium et de titane,
en ce qu'ensuite on insuffle à travers la sole du four à induction des gaz de procédé, pour dégrader les teneurs non désirées de zinc, titane, niobium et bore de la masse brute fondue par vaporisation et oxydation jusqu'aux teneurs de 0,001 à 0,01 % en poids, après quoi elle est descoriée et en ce qu'après l'enlèvement des scories, on obtient la composition désirée du métal de base pour la fonte modulaire par transvasement dans un four de fusion installé à la suite, en ajoutant un support de silicium et de carbone dans le four et/ou la cuve.
